# EUROPEAN PATENT APPLICATION

(11) **EP 3 502 911 A1**
(43) Date of publication of application: **26.06.2019**
(21) Application number: 17210063.8
(22) Date of filing: 22.12.2017
(51) Int. Cl.: G06F 13/40, G06F 21/85

(54) **SECURING DIGITAL DATA TRANSMISSION IN A COMMUNICATION LINK**

(71) Applicant: Nagravision S.A., 1033 Cheseaux-sur-Lausanne (CH)
(72) Inventor: PELLETIER, Hervé, 1616 Attalens (CH); KAUFMANN, Thierry, 1004 Lausanne (CH)
(74) Representative: Ipside

(57) **Abstract**

A protection device configured to secure digital data transmission between a host unit and a peripheral unit by controlling direction of the digital data transmission from the host unit to the peripheral unit and inversely. The protection device comprises a first communication module configured to transmit data from the host unit to the peripheral unit via a first unidirectional link, and a second communication module configured to transmit data from the peripheral unit to the host unit via a second unidirectional link. The first communication module is physically independent from the second communication module. The first communication module is configured to be enabled while the second communication module is configured to be disabled during data transmission from the host unit to the peripheral unit. The second communication module is configured to be enabled while the first communication module is configured to be disabled during data transmission from the peripheral unit to the host unit.

## Description

### Introduction

The present disclosure generally relates to a protection device to secure digital data transmission between a host unit and a peripheral unit. In particular, a solution for controlling direction of digital data exchange via a serial link is disclosed.

### Technical background

Serial links such as Universal Serial Bus (USB) link have become the most commonly used standard for connecting peripheral units to host units in many applications. For example, personal computers may be linked to mass storage devices such as flash memory sticks, hard disks or solid-state drives (SSD) as well as to input devices (mouse and keyboard) or printers. A USB link allows a large number of peripheral units to be connected to a host unit and does not require initialization. Additional advantages of USB link include a low cost, a wide compatibility to many kinds of available peripheral units. USB peripheral units offer plug and play feature by eliminating necessity to turn off or restart the host unit when attaching a new peripheral unit. USB connections require no terminators, memory addresses or identifiers. They also use a cable that is small, simple, inexpensive and easy to attach. USB further supports simultaneous connection of multiple devices by attaching peripheral units through interconnected external hubs. In addition, USB link offers data transfer rates much faster than traditional serial ports.

For security purposes, there is a need to control the physical path of data exchanges between a peripheral unit and a host unit. For example, data transmission may be performed only from a removable USB storage device to a personal computer without any return transmission from the computer to the removable storage device. In this case, if the personal computer is infected with a virus or a malware, this data cannot be forwarded to the removable storage device and further infect other personal computers when connected to the same removable storage device.

As the protocol managing the USB link is conceived for bidirectional transmission, there is no physical impermeability on the direction of communication. Software solutions for ensuring transmission in one direction only may be envisaged, but they may present drawbacks because they could be based on malicious or corrupted programs. In these conditions, an efficient and reliable control of data transmission direction may be compromised.

### Summary

The present disclosure relates to a protection device configured to secure digital data transmission between a host unit and a peripheral unit by controlling direction of the digital data transmission from the host unit to the peripheral unit and inversely

The protection device comprises a first communication module configured to transmit data from the host unit to the peripheral unit via a first unidirectional link, and a second communication module configured to transmit data from the peripheral unit to the host unit via a second unidirectional link.

The first communication module is physically independent from the second communication module.

The first communication module is configured to be enabled while the second communication module is configured to be disabled during data transmission from the host unit to the peripheral unit.

The second communication module is configured to be enabled while the first communication module is configured to be disabled during data transmission from the peripheral unit to the host unit.

Controlling the data transmission direction means that a data set is transmitted in a predetermined direction either from the host unit to the peripheral unit without any return transmission from the peripheral unit or from the peripheral device to the host device without any return transmission from the host unit.

The protection device may include a housing comprising a first connector configured to be connected to the host unit and a second connector configured to be connected to the peripheral unit in an analogous way to an adapter. A switch actionable by a button arranged on the housing allows a user to select the data transmission direction. Accordingly, the data may be transmitted either from the host unit to the peripheral unit by enabling the first communication module while the second communication module is disabled or from the peripheral unit to the host unit by enabling the second communication module while the first communication module is disabled.

The protection device is thus configured to control direction of data transmission between the host unit and the peripheral unit by enabling a first unidirectional transmission direction from host to peripheral unit and a second unidirectional transmission direction from the peripheral unit to the host unit.

The protection device thus prevents leaks of confidential data sets as well as distribution of malicious software and propagation of viruses from host unit to peripheral unit and vice versa. In fact, since the data transmission direction is user controlled, a malicious program implemented in the host unit or in the peripheral unit cannot contaminate the peripheral unit, respectively the host unit. For example, a USB flash drive supposed to be infected by a virus, may be used for storing files retrieved from a personal computer. The protection device inserted between the personal computer and the USB flash drive may be set up to allow data transmission from the personal computer to the USB flash drive only, but not from the USB flash drive to the personal computer. In this case, the virus contained in the USB flash drive cannot be transmitted to the personal computer since the return data transmission direction is disabled.

Since the malicious programs or viruses may propagate from the host unit to the peripheral unit or inversely independently of the nature of the host unit or the peripheral unit, the protection device may be inserted in any USB link for controlling data transmission direction.

### Brief description of the drawings

Figure 1 shows a block diagram of the disclosed protection device configured to be inserted between a host unit and a peripheral unit.
Figure 2 schematically illustrates the protection device connected as an adapter between an input / output USB port of the host unit such as a personal computer and an input / output USB port of the peripheral unit such as a flash drive.

### Detailed description

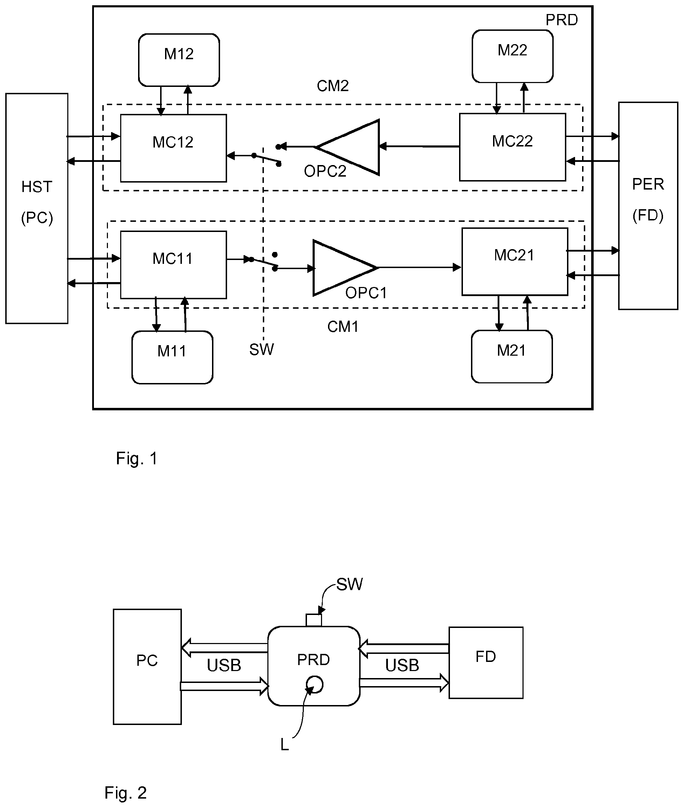

A preferred embodiment of the protection device as illustrated by figure 1 comprises a first communication module CM1 configured to transmit data in a first direction from the host unit HST towards the peripheral unit PER and a second communication module CM2 configured to transmit data in a second direction from the peripheral unit PER towards the host unit HST. The first communication module CM1 is physically independent from the second communication module CM2 which means that when the first communication module CM1 operates, the second communication module CM2 is out of service and vice-versa. In other words, there is no physical link between the first communication module CM1 and the second communication module CM2.

The first communication module CM1 comprises a first microcontroller MC11 associated with a first cache memory M11, an optocoupler OPC1 and a second microcontroller MC21 associated with a second cache memory M21. The first microcontroller MC11 comprises an input / output port configured to exchange data with the host unit HST in a way to simulate a direct communication link with the peripheral unit PER. The first microcontroller MC11 further comprises an output configured to transmit processed data towards an input of the optocoupler OPC1. The cache memory M11 allows to store temporally the data received from the host unit HST for checking before transfer to the output.

An optocoupler, also called an opto-isolator, photocoupler, or optical isolator, is a component that transfers electrical signals between two isolated circuits by using light. A common type of optocoupler consists of a Light Emitting Diode (LED) operating as signal emitter and a phototransistor operating as receiver of the signal emitted by the LED, both housed in a same opaque package. Thanks to its structure comprising non-reversible components including the LED and the phototransistor, the optocoupler transmits signals or data in a unidirectional way from the input (LED) to the output (phototransistor).

The optocoupler OPC1 forwards unidirectionally the received processed data to an input of the second microcontroller MC21, which is provided with an input / output port configured to transmit the data to the peripheral unit PER. The input / output port of the second microcontroller MC21 is configured in an analogous way to the input / output port of the first microcontroller MC11. This configuration allows the second microcontroller MC21 exchanging data with the peripheral unit PER in a way to simulate a direct communication link with the host unit HST. The cache memory M21 allows to store temporally the data received from the optocoupler OPC1 for checking before transfer to the peripheral unit PER.

The second communication module CM2 comprises a first microcontroller MC22 associated with a first cache memory M22, an optocoupler OPC2 and a second microcontroller MC12 associated with a second cache memory M12. The first microcontroller MC22 comprises an input / output port configured to exchange data with the peripheral unit PER in a way to simulate a direct communication link with the host unit HST. The first microcontroller MC22 further comprises an output configured to transmit processed data towards an input of the optocoupler OPC2. The cache memory M22 allows to store temporally the data received from the peripheral unit PER for checking before transfer to the output.

The optocoupler OPC2 forwards unidirectionally the received processed data to an input of the second microcontroller MC12, which is provided with an input / output port configured to transmit the data to the host unit HST. The input / output port of the second microcontroller MC12 is configured in an analogous way to the input / output port of the first microcontroller MC22. This configuration allows the second microcontroller MC12 exchanging data with the host unit HST in a way to simulate a direct communication link with the peripheral unit PER. The cache memory M12 allows to store temporally the data received from the optocoupler OPC2 for checking before transfer to the host unit HST.

The protection device PRD may comprise a switch SW allowing a user to select the direction of the data transmission from host unit HST to the peripheral unit PER or inversely. The switch SW is arranged within the unidirectional link of the first communication module CM1 and within the unidirectional link of the second communication module CM2. In the example of figure 1, the switch SW may be arranged in series with the optocoupler OPC1, OPC2 of each communication module CM1, CM2. The switch SW may be placed either at the output of the first microcontroller MC11 of the first communication module CM1 and at the input of the second microcontroller MC12 of the second communication module CM2 or at the input of the second microcontroller MC21 of the first communication module CM1 and at the output of the first microcontroller MC22 of the second communication module CM2.

According to a practical exemplary embodiment, the protection device PRD may be used for protecting a USB link between a host unit HST having a USB input / output port and a peripheral unit PER having a corresponding USB input / output port. USB stands for Universal Serial Bus allowing data transmission according to a communication protocol complying to the known USB standards.

The host unit HST may include a desktop or a portable personal computer, a tablet, a smartphone, personal digital assistant, or any terminal adapted to communicate with a peripheral unit PER via a USB link.

The peripheral unit PER may include a USB flash drive, a hard disk, a solid-state disk or any other mass storage devices adapted to transmit or receive data via a USB link. Devices such as cameras, printers, scanners, or any other peripherals devices configured to exchange data with a host computer may also be considered as peripheral units. Another desktop or a portable personal computer, tablet, smartphone, personal digital assistant or any terminal provided with a storage area may also communicate with a host computer via a USB link for loading into or retrieving data from the storage area.

According to an example illustrated by figure 2, the host unit HST includes a personal computer PC and the peripheral unit PER a USB flash drive FD. A USB port of the personal computer PC is connected to an input port of the USB protection device PRD as described above and the USB flash drive is connected to an output port of the USB protection device PRD. In other words, the USB protection device PRD operates as an adapter connected between the USB port of the personal computer PC and the USB port of the flash drive FD.

The protection device PRD is powered by the host unit HST via the power and ground outlets of the USB port. The input port of the USB protection device PRD connected to the host unit HST forwards the power to the output port of said USB protection device PRD and to flash drive connected to said output port.

Furthermore, the protection device PRD may comprise at least one optical signaling device in form of a LED L configured to indicate a successful data transmission from the host unit HST to the peripheral unit PER or inversely. The at least one LED may be arranged on a visible face of the protection device housing.

In order to prevent data transmission between the first communication module CM1 and the second communication module CM2 through the LED L, it may be preferable to arrange one LED for each communication module CM1, CM2 in order to indicate successful data transmission either from the host unit HST to the peripheral unit PER or inversely depending on which communication module CM1 or CM2 is activated.

According to an embodiment, each microcontroller MC11 and MC21 of the first communication module CM1 and each microcontroller MC22 and MC12 of the second communication module CM2 may be provided with a LED L to indicate successful data transmission through the corresponding communication module. In this case the protection device comprises four LEDs, that is to say, two LEDs only may operate when the respective communication module is activated.

According to a further embodiment, the communication modules may have no LED.

The switch SW for user selecting data transmission direction may be in form of a pushbutton arranged on a face of the housing of the protection device. For example, when the button is pushed, data may be transmitted from the host unit HST to the peripheral unit PER and when the button is released, the data may be transmitted from peripheral unit PER to the host unit HST.

Upon establishment of the connection between the personal computer PC and the protection device PRD, presence of the protection device PRD is detected by the personal computer PC. In fact, the first microcontroller MC11 of the first communication module CM1 and the second microcontroller MC12 of the second communication module CM2 simulate a peripheral unit as it is directly connected to the personal computer PC. It has to be noted that at this stage, the personal computer PC does not detect any peripheral unit connected or not to the protection device PRD.

In case where the second communication module CM2 is activated in order to enable data transmission from the flash drive FD to the personal computer PC, the first microcontroller MC22 may receive a signaling data packet from the flash drive FD upon connection of the flash drive FD to the protection device PRD. The signaling data packet may further comprise information data such as an identifier, a descriptor, available memory capacity, state information (ready, busy, out of service) or any other information to be used by the personal computer PC. The signaling data packet is then forwarded unidirectionally by the first microcontroller MC22 to the second microcontroller MC12 of the second communication module CM2 to the personal computer PC via the second optocoupler OPC2. In this case, the first communication module CM1 is disabled so that no data is transmitted from the personal computer PC to the flash drive FD.

In case where the first communication module CM1 is activated in order to enable data transmission from the personal computer PC to the flash drive FD, the second microcontroller MC21 may receive the signaling data packet from the flash drive FD upon connection of the flash drive FD to the protection device PRD. As the communication is possible only from the first microcontroller MC11 to the second microcontroller MC21, the latter only performs an initialization of the flash drive FD. The first microcontroller MC11 does not know if the flash drive is connected or not, but it simulates presence of a flash drive by transmitting to the personal computer default information regarding available storage capacity for example. In this case, the second communication module CM2 is disabled so that no data is transmitted from the flash drive FD to the personal computer PC.

### Data transfer from the host unit HST to the peripheral unit PER via an USB link

The communication steps from the host unit HST to the peripheral unit PER via an USB link through the protection device PRD can be summarized as follow provided that only the first communication module CM1 is enabled:
- The first microcontroller MC11 simulates the responses of the peripheral unit PER for USB communications with the host unit HST such as initialization, enumeration, information on empty memory capacity, etc.
- The host unit HST may send data to the first microcontroller MC11 that stores the received data into the cache memory M11. Acknowledgment ACK may be executed between the host unit HST and the first microcontroller MC11.
- The data may be transferred via the optocoupler OPC1 to the second microcontroller MC21 that stores the data into the cache memory M21.
- The microcontroller MC21 simulates the host unit HST and performs USB communication such as initialization, enumeration, etc. and then sends the data and acknowledgement ACK to the peripheral unit PER.
- The communication may be terminated by disabling the first communication module CM1. The signaling LED may be turned on to indicate a successful data transfer from the host unit HST to the peripheral unit PER.

### Example with a personal computer as host unit and a flash drive as peripheral unit

For transferring one or more files to be stored in the flash drive FD, the personal computer PC initiates the transfer by sending a request data packet called OUT-request data packet for bulk transfer of a data set to the first microcontroller MC11 of the first communication module CM1. The first microcontroller MC11 returns an acknowledgement ACK indicating in a user interface of the personal computer PC that the request is accepted. The flash drive simulation by the first microcontroller MC11 results to a further indication that empty memory capacity is available on the flash drive FD. The data set for the bulk transfer thus can be transmitted to the first microcontroller MC11 which stores this data set into the first cache memory M11. The OUT-request data packet and the data set for the bulk transfer are then forwarded to the second microcontroller MC21 unidirectionally via the first optocoupler OPC1. The second microcontroller MC21 stores the received OUT-request data packet and the data set into the second cache memory M21 during checking availability of the flash drive FD by retrieving state information (ready, busy, out of service) of said flash drive FD. If the flash drive checking is successful, the bulk transfer of the data set may be performed according to the OUT-request data packet by transmitting the data set stored in the cache memory M21 to the flash drive FD. The second microcontroller MC21 activates the LED L to indicate that the data transfer from the personal computer PC to the flash drive FD was successful.

The second communication module CM2 is disabled during the data transfer from the personal computer PC to the flash drive FD and therefore the corresponding microcontrollers MC22 and MC12 are unable to activate the LED L.

### Data transfer from the peripheral unit PER to the host unit HST via an USB link

The communication steps from the peripheral unit PER to the host unit HST via an USB link through the protection device PRD can be summarized as follow provided that only the second communication module CM2 is enabled:
- The first microcontroller MC22 simulates the responses of the host unit HST for USB communications with the peripheral unit PER such as initialization, enumeration, etc.
- The first microcontroller MC22 requests data of the peripheral unit PER and stores the data into cache memory M22 and executes acknowledgement ACK with the peripheral unit PER.
- The first microcontroller MC22 sends the data to the second microcontroller MC12 via the optocoupler OPC2, the second microcontroller MC12 stores the data into the cache memory M12.
- The second microcontroller MC12 simulates USB communication of the peripheral unit PER with the host unit HST such as initialization, enumeration, etc., and sends the requested data to the host unit HST. Acknowledgement is done between the host unit HST and the second microcontroller MC12.
- The communication may be terminated by disabling the second communication module CM2. The signaling LED may be turned on to indicate a successful data transfer from the peripheral unit PER to the host unit HST.

### Example with a personal computer as host unit and a flash drive as peripheral unit

For transferring one or more files from the flash drive FD to the personal computer PC, the first microcontroller MC22 initiates the transfer by sending to the flash drive FD a request data packet called IN-request data packet for bulk transfer of a data set. After acknowledgement from the flash drive FD, the first microcontroller MC22 stores the data set into the cache memory M22 according to information provided by the IN-request data packet. The data set is then forwarded to the second microcontroller MC12 unidirectionally via the optocoupler OPC2. The second microcontroller MC12 stores the received data set into the cache memory M12 and waits for the personal computer PC to request the data set. In response to the request from the personal computer PC, the data set stored in the cache memory M12 may be transferred in a memory of the personal computer PC for rendering them accessible by an appropriate user interface.

The second microcontroller MC12 activates the LED L to indicate a successfully transfer of the files from the flash drive FD to the personal computer PC.

The first communication module CM1 is disabled during this data set transfer from the flash drive FD to the personal computer PC and therefore the corresponding microcontrollers MC11 and MC21 are unable to activate the LED L.

### Further features

According to an embodiment, if the flash drive FD is busy or out of service, the first microcontroller MC22 of the second communication module CM2 may transmit, via the optocoupler OPC2, an error message to the second microcontroller MC12 which forwards it to the personal computer PC. This transmission can occur only when the second communication module CM2 is activated with the switch SW in a position allowing said transmission, the first communication module CM1 being disabled.

According to a further embodiment, the first microcontroller MC11 of the first communication module CM1 may send a time out message to the personal computer PC when no response is received after a predetermined time following transmission of the OUT-request by the personal computer PC.

In an analogous way, the second microcontroller MC12 of the second communication module CM2 may send a time out message to the personal computer PC when the data set has not been received after a predetermined time following transmission of the IN-request by the first microcontroller MC22 to the flash drive FD.

Although embodiments of the present disclosure have been described with reference to specific example embodiments, it will be understood that various modifications and changes may be made to these embodiments without departing from the broader scope of these embodiments. Accordingly, the specification and drawings are to be regarded in an illustrative rather than a restrictive sense. The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived there from, such that structural and logical substitutions and changes may be made without departing from the scope of this disclosure. The detailed description, therefore, is not to be taken in a limiting sense, and the scope of various embodiments is defined only by the appended claims, along with the full range of equivalents to which such claims are entitled.

Such embodiments of the inventive subject matter may be referred to herein, individually and/or collectively, by the term "disclosure" merely for convenience and without intending to voluntarily limit the scope of this application to any single inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A protection device configured to secure transmission of digital data between a host unit (HST) and a peripheral unit (PER) by controlling direction of the digital data transmission from the host unit (HST) to the peripheral unit (PER) and inversely, the protection device (PRD) is **characterized in that** it comprises:
a first communication module (CM1) configured to transmit data from the host unit (HST) to the peripheral unit (PER) via a first unidirectional link,
a second communication module (CM2), physically independent of the first communication module (CM1), configured to transmit data from the peripheral unit (PER) to the host unit (HST) via a second unidirectional link,
the first communication module (CM1) being configured to be enabled while the second communication module (CM2) is configured to be disabled during data transmission from the host unit (HST) to the peripheral unit (PER), the second communication module (CM2) being configured to be enabled while the first communication module (CM1) is configured to be disabled during data transmission from the peripheral unit (PER) to the host unit (HST).

2. The protection device according to claim 1 **characterized in that** the first communication module (CM1) comprises a first microcontroller (MC11) having an input / output port configured to exchange data with the host unit (HST) and an output configured to transmit data received from the host unit (HST) to an input of a second microcontroller (MC21) via the first unidirectional link, the second microcontroller (MC21) having an input / output port configured to forward the data received from the host unit (HST) to the peripheral unit (PER),
and **in that** the second communication module (CM2) comprises a first microcontroller (MC22) having an input / output port configured to exchange data with the peripheral unit (PER) and an output configured to transmit data received from the peripheral unit (PER) to an input of a second microcontroller (MC12) via the second unidirectional link, the second microcontroller (MC12) having an input / output port configured to forward the data received from the peripheral unit (PER) to the host unit (HST).

3. The protection device according to claim 1 and 2 **characterized in that** the first unidirectional link includes a first opto-coupler (OPC1) configured to transmit data from the first microcontroller (MC11) to the second microcontroller (MC21) of the first communication module (CM1) and **in that** the second unidirectional link includes a second opto-coupler (OPC2) configured to transmit data from the first microcontroller (MC22) to the second microcontroller (MC12) of the second communication module (CM2).

4. The protection device according to anyone of claim 1 to 3 **characterized in that** the first microcontroller (MC11) and the second microcontroller (MC21) of the first communication module (CM1) are each associated with a cache memory (M11, M21) and **in that** the first microcontroller (MC22) and the second microcontroller (MC12) of the second communication module (CM2) are each associated with a cache memory (M22, M12).

5. The protection device according to anyone of claim 1 to 4 **characterized in that** it comprises a switch (SW) configured to select data transmission direction either from the host unit (HST) to the peripheral unit (PER) or from peripheral unit (PER) to the host unit (HST), the switch being arranged within the unidirectional link of the first communication module (CM1) and within the unidirectional link of the second communication module (CM2).

6. The protection device according to anyone of claim 1 to 5 **characterized in that** it comprises at least one optical signaling device in form of a LED (L) configured to indicate a successful data transmission from the host unit (HST) to the peripheral unit (PER) or inversely.

7. The protection device according to anyone of claim 1 to 6 **characterized in that** the first communication module (CM1) and the second communication module (CM2) are configured to communicate with the host unit (HST) and the peripheral unit (PER) via a universal serial bus of USB type by using a communication protocol according to USB standards.

8. The protection device according to claim 7 **characterized in that** it is configured to be linked between a host unit (HST) having a USB input output port and a peripheral unit (PER) having a corresponding USB input output port, the host unit (HST) being selected in a group comprising a desktop or a portable personal computer, a tablet, a smartphone or any terminal adapted to communicate via a USB link, the peripheral unit (PER) being selected in a group comprising a USB flash drive, a hard disk, a solid-state disk or any device comprising a storage area adapted to transmit or receive data via a USB link.

9. A method to transmit digital data from a host unit (HST) to a peripheral unit (PER) by controlling direction of the digital data transmission with a protection device (PRD), the protection device (PRD) comprising a first communication module (CM1) configured to transmit data from the host unit (HST) to the peripheral unit (PER) via a first unidirectional link, and a second communication module (CM2), the method comprising:
transmitting by the host unit a request data packet to a first microcontroller (MC11) of the first communication module (CM1),
returning by the first microcontroller (MC11) an acknowledgement indicating to the host unit (HST) that the request is accepted,
transmitting by the host unit (HST) a data set intended to be stored by the peripheral unit (PER) to the first microcontroller (MC11) and storing said data set in a first cache memory (M11) associated with first microcontroller (MC11),
forwarding by the first microcontroller (MC11) the request data packet and the data set to a second microcontroller (MC21) of the first communication module (CM1) in a unidirectional way via a first optocoupler (OPC1), the second microcontroller (MC21) storing the received request data packet and the data set into a second cache memory (M21) associated with the second microcontroller (MC21),
checking by the second microcontroller (MC21) availability of the peripheral unit (PER) and transmitting the data set stored in the cache memory (M21) to the peripheral unit (PER) if availability checking is successful, storing the data set by the peripheral unit (PER) according to the request data packet, the second communication module (CM2) being disabled during transmission of the data set from the host unit (HST) to the peripheral unit (PER).

10. The method to transmit digital data from the peripheral unit (PER) to the host unit (HST) by controlling direction of the digital data transmission with the protection device (PRD), the digital data having been previously transmitted by the host unit (HST) to the peripheral unit (PER) according to claim 9, comprising:
checking by a first microcontroller (MC22) of the second communication module (CM2) availability of the peripheral unit (PER) and forwarding a request data packet to the peripheral unit (PER),
if availability checking is successful, forwarding by the peripheral unit (PER) the data set previously stored to the first microcontroller (MC22) in response to the request data packet, storing the data set in a cache memory (M22) associated with the first microcontroller (MC22),
forwarding by the first microcontroller (MC22) the stored data set to a second microcontroller (MC12) in a unidirectional way via a second optocoupler (OPC2), the second microcontroller (MC12) storing the received data set into a second cache memory (M12) associated with the second microcontroller (MC12),
transmitting by the second microcontroller (MC12) the data set stored in the cache memory (M12) to the host unit (HST), and storing the data set in a memory of the host unit (HST), the first communication module (CM1) being disabled during transmission of the data set from the peripheral unit (PER) to the host unit (HST).

11. The method according to claim 9 or 10 **characterized in that** a successful data transmission from the host unit (HST) to the peripheral unit (PER) or inversely is indicated by at least one optical signaling device in form of a LED (L) arranged on the protection device (PRD).

12. The method according to anyone of claim 9 to 11 **characterized in that** the first communication module (CM1) and the second communication module (CM2) of the protection device (PRD) communicate with the host unit (HST) and the peripheral unit (PER) via a universal serial bus of USB type by using a communication protocol according to USB standards.

13. The method according to claim 12 **characterized in that** the host unit (HST) is selected in a group comprising a desktop or a portable personal computer, a tablet, a smartphone or any terminal adapted to communicate via a USB link, the peripheral unit (PER) is selected in a group comprising a USB flash drive, a hard disk, a solid-state disk or any device comprising a storage area adapted to transmit or receive data via a USB link.
